Europäisches Patentamt

European Patent Office

Office européen des brevets

(19)

(11) Publication number: **0 021 607**
**B1**

(12) **EUROPEAN PATENT SPECIFICATION**

(45) Date of publication of patent specification: **11.05.83**

(21) Application number: **80301726.8**

(22) Date of filing: **23.05.80**

(51) Int. Cl.³: **C 10 L 1/18,**
**C 08 F 210/02,**
**E 21 B 43/25**

(54) Use of an additive for improving the cold flow properties of a petroleum oil, petroleum compositions containing this additive and masterbatches containing this additive.

(30) Priority: **20.06.79 GB 7921504**

(43) Date of publication of application:
**07.01.81 Bulletin 81/1**

(45) Publication of the grant of the patent:
**11.05.83 Bulletin 83/19**

(84) Designated Contracting States:
**BE DE FR GB IT LU NL SE**

(56) References cited:
**EP - A - 0 003 489**
**GB - A - 1 263 151**
**GB - A - 1 263 152**
**US - A - 3 669 189**
**US - A - 3 862 825**

(73) Proprietor: **IMPERIAL CHEMICAL INDUSTRIES PLC**
**Imperial Chemical House Millbank**
**London SW1P 3JF (GB)**

(72) Inventor: **Gilby, Gordon William**
**2 The Ryde**
**Hatfield, Hertfordshire (GB)**

(74) Representative: **James, David Gomer et al,**
**Imperial Chemical Industries PLC Legal Department: Patents Thames House North Millbank**
**London SW1P 4QG (GB)**

Courier Press, Leamington Spa, England.

# 0 021 607

Use of an additive for improving the cold flow properties of a petroleum oil, petroleum compositions containing this additive and masterbatches containing this additive

This invention relates to additives for improving the cold flow properties of petroleum oil especially crude oils and fuel oils which contain distillation residues.

The use of copolymers of ethylene with vinyl acetate (known as EVA) to improve the flow properties of petroleum oils at low temperature has been known for many years. This subject matter is described in US patent specifications 4 087 255; 3 981 850; 3 947 368; 3 862 825; 3 792 984; 3 709 359 and 3 669 189 as well as UK patent specifications 1 263 151; 1 147 904 and 900 202. European Patent Application Publication No. 3489 (which is not prior published) discloses the use of certain special EVA's which are useful for improving the cold flow properties of crude oil. We have now found that other EVA's can improve the flow properties of petroleum oils.

Accordingly, this invention includes the use of a copolymer of ethylene with vinyl acetate, which copolymer

(a) contains V% by weight of vinyl acetate where V is 5 to 50, preferably 15 to 40;

(b) has a melt flow index of M g/10 minutes as measured according to British Standard 2782: Part 1/105C of 1976 using a 2.16 kg load where M is at least 1 and less than 50, and

(c) has a B parameter as hereinafter defined where B is 1 to 10

to improve the cold flow properties of a petroleum oil, especially a crude oil, characterised in that the copolymer is such that the algebraic expression

$$(V/6)+(B/2.3)-\log M$$

is less than 6.2.

(Throughout this specification logarithms are to base 10).

The invention includes a wax containing petroleum oil composition which includes 10 to 10000, preferably 10 to 1000, for example 20 to 250, parts per million (hereafter simply "ppm") by weight, based on the total composition, of a copolymer as specified above. Suitable compositions include crude oils; e.g. residual fuel oil compositions and waxy distillates, e.g. waxy diesel fuels.

One method of preparing the copolymers mentioned above comprises feeding the comonomers together with a peroxide initiator and a non-reactive chain terminator, e.g. propane, to a stirred autoclave which has been previously purged with nitrogen. The polymerisation is preferably carried out at 1000 to 2700 kg/cm$^2$ and 100°C to 300°C, especially 150°C to 250°C.

The copolymers can also be applied down oil wells to inhibit the formation of waxy deposits or to dissolve existing deposits on the sides of the well casing. Similarly the copolymers can also be used to inhibit deposition, or to assist in the removal of, waxy deposits from the walls of pipelines, tanks and storage vessels.

The blending of the above-mentioned copolymers with petroleum oils can be facilitated by first forming masterbatches, i.e. concentrated solutions of the EVA in suitable hydrocarbon solvents, e.g. aromatic hydrocarbons such as toluene, xylene or aromatic extracts from petroleum fractions.

Suitable concentrations of the EVA in the masterbatch are 0.5 to 50%, preferably 1 to 30% by weight based on the total masterbatch. These masterbatches form part of the invention.

The methods used to measure the vinyl acetate content and the B parameters will now be described.

Vinyl acetate content

All the vinyl acetate contents given in this specification were obtained by infrared spectroscopy using an absorbance ratio method. The method was applied to specimens in the form of hot pressed sheet approximately 3 to 4 mm thick. (The exact thickness does not matter since an absorbance ratio method is used).

The absorption bands at 2.133 $\mu$m and 1.429 $\mu$m are measured. The absorbance at 2.133 $\mu$m, hereinafter $A_{VA}$, arises from carbonyl groups and hence it is a measurement of the vinyl acetate content of an EVA.

The absorbance, hereinafter $A_E$, at 1.429 $\mu$m is related to carbon-hydrogen vibration.

The vinyl acetate makes a small contribution to $A_E$ and is corrected by

$$A_E'=A_E-0.1A_{VA}$$

$A_E'$ is then proportional to the ethylene content of an EVA and hence the ratio

$$A_{VA}/A_E$$

is proportional to the ratio of vinyl acetate:ethylene in the copolymer. It is necessary to standardise the method against an EVA of known composition but once standardised the method gives the vinyl

2

# 0 0 2 1 6 0 7

acetate content of an EVA as weight ratio of vinyl acetate:ethylene. The weight percentage and the mole ratio can be calculated from this.

B Parameter

The B parameter is obtained by nuclear magnetic resonance spectroscopy, hereinafter called "nmr". It is believed to corresponding to the amount of chain branching but we do not intend to be bound by the interpretation of the B parameter.

The method is carried out as follows.

About 1 g of the EVA is dissolved in about 5 ml of a mixture of ortho and/or para dichlorobenzene. A small amount of this solution in a 5 mm diameter nmr tube is used in the nmr probe. The sample was maintained at 140°C during the scan which is taken at an operating frequency of 220 MHz.

The resonance positions are defined as chemical shifts (in ppm of magnetic field) from the resonance position of hexamethyl disiloxane (which is arbitrarily assigned the position of zero ppm). The scan is carried out over a shift range of 0 to 5 ppm. The following resonances are noticed in this range:—

| Shift (ppm) | Assignment |
|---|---|
| 0.85 | $CH\!-\!CX_3$ or $CH_2CX_3$ |
| 1.25 | $-\!(CX_2)_n\!-$ |
| 1.45 | $-\!CX_2\!-\!CHO\!-\!CX_2\!-$ |
| 1.87 | $-\!CO\!-\!CX_3$ |
| 4.85 | $-\!CX(OOC\!-\!)\!-$ |

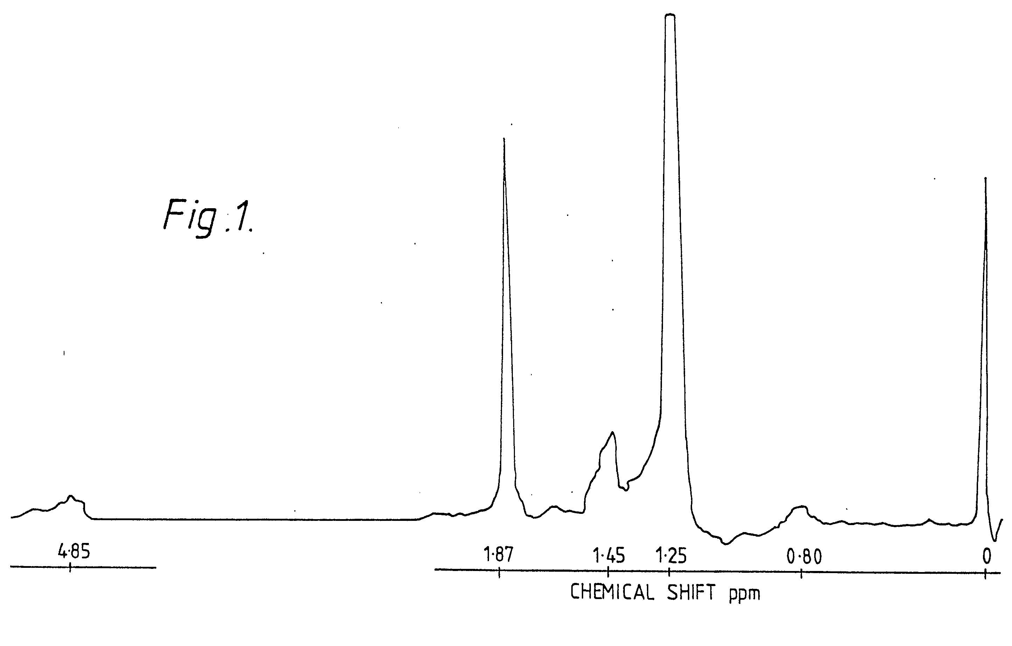

Figure 1 shows this portion of the spectrum; the resonance at 0 ppm is caused by hexamethyl siloxane as standard.

This nmr method responds to hydrogen atoms in certain environments. The environments are given in the "assignment" in which X represents the hydrogen atoms responsible for the resonance.

The resonance at 0.85 ppm arises from the (three) hydrogen atoms of methyl groups attached to a $CH_2$ group at the end of linear branches or at the ends of the main chain or attached to a $CH_2$ group inside a chain. The area of this resonance, hereinafter called $A_1$ is, therefore, a measure of the amount of branching.

The resonance at 4.85 ppm, arises from one of the hydrogen atoms of the vinyl acetate groups (i.e. X in the formula $-\!CXOOCCH_3$). Its area, hereinafter called $A_2$, is a measure of the amount of vinyl acetate in the copolymer.

The ratio $R_1\!=\!A_1/3A_2$ gives the molar ratio of "branches": VA in the copolymer.

It is emphasised that it is necessary to use a frequency of 22 MHz (or higher) in order to resolve the required resonances adequately.

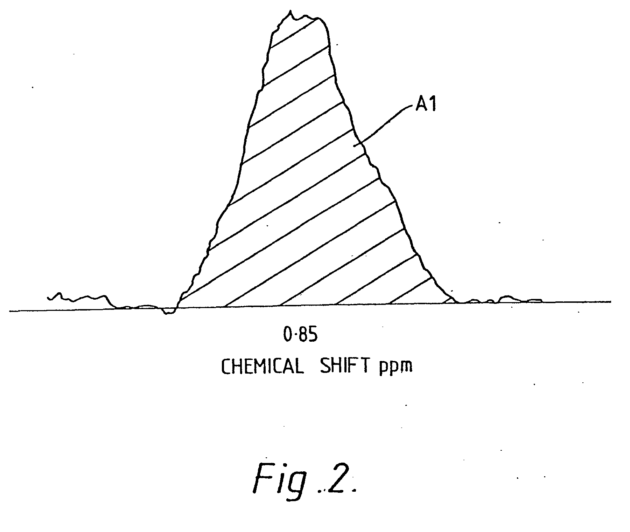

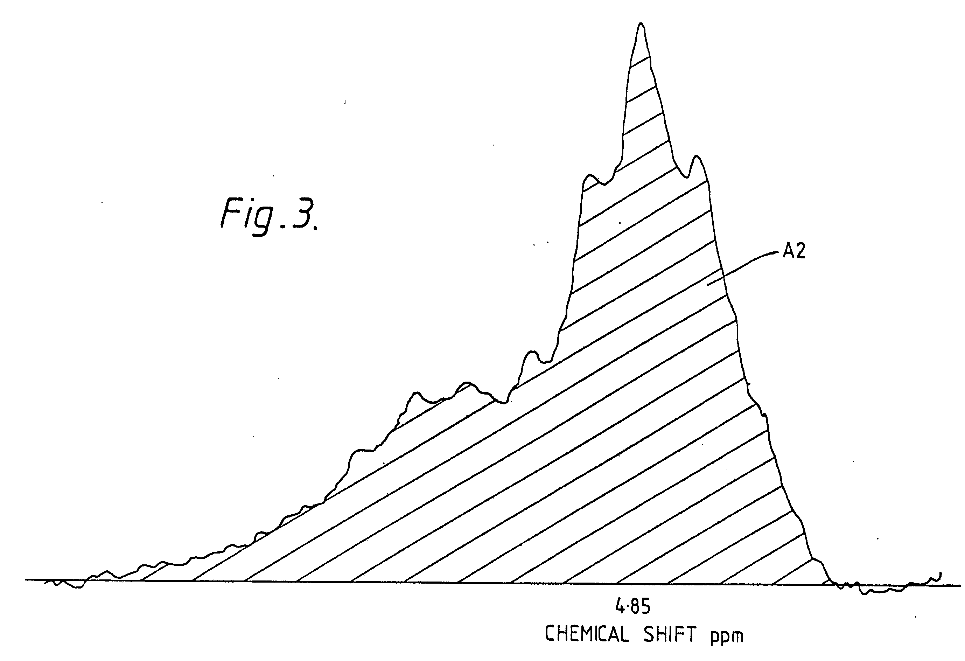

Figure 2 shows the methyl resonance ($A_1$) and Figure 3 the vinyl acetate resonance ($A_2$) both on the same enlarged scale. These resonances should be measured from the plot (instead of using the integrating circuitry of the spectrograph) by measuring the shaded areas in Figures 2 and 3.

The results of the infrared method described above can be used to obtain the mole ratio

$$R_2\!=\!(VA\ groups)\!:\!(-\!CH_2\text{-groups})$$

in the copolymer.

The parameter B is given by $1000R_1R_2$.

We interpret the parameter B as the number of branches per 1000 carbon atoms of the copolymer. Even if the interpretation is wrong, the B parameter, in conjunction with VA content and the MFI, defines and determines which EVAs give particularly good performance as pour point additives.

Four compositions according to the invention will now be described by way of example. These four compositions illustrate the use of the ethylene/vinyl acetate copolymers prepared using propane as chain terminator. These copolymers, commercially available as "Evatane" 33-25, "Evatane" 28-05, "Evatane" 24-20 and "Evatane" 18-02, are defined in Table 1 as EVA 1, EVA 2, EVA 3 and EVA 4 respectively.

TABLE 1

| Code | EVA1 | EVA2 | EVA3 | EVA4 |
|---|---|---|---|---|
| Vinyl acetate content (%)(=V) | 33 | 28 | 24 | 18 |
| V/6 | 5.50 | 4.66 | 4.00 | 3.00 |
| MFI (=M) | 25 | 5.5 | 20 | 2 |
| log M | 1.40 | 0.74 | 1.30 | 0.30 |
| B parameter | 4.7 | 5.0 | 7.1 | 6.0 |
| B/2.3 | 2.04 | 2.17 | 3.08 | 2.60 |
| (V/6)+(B/2.3)—log M | 6.14 | 6.09 | 5.78 | 5.30 |

The B parameter was obtained using nuclear magnetic resonance as described above.

3

The value of $(V/6)+(B/2,3)-\log M$ will be called the "discriminant" of the EVA.

The use of each copolymer specified in Table 1 is in accordance with the invention because each discriminant is less than 6.2.

Five comparative tests were carried out on five other compolymers as defined in Table 2.

TABLE 2

| Code | C1 | C2.1 | C2.2 | C3 | C4 |
|---|---|---|---|---|---|
| Vinyl acetate %(=V) | 33 | 28 | 28 | 24 | 18 |
| V/6 | 5.50 | 4.66 | 4.66 | 4.00 | 3.00 |
| MFI (=M) | 43 | 6 | 3 | 20 | 2.5 |
| log M | 1.63 | 0.28 | 0.48 | 1.30 | 0.40 |
| B parameter (=B) | 8.5 | 5.5 | 5.3 | 11.3 | 10.2 |
| B/2.3 | 3.82 | 2.39 | 2.30 | 4.91 | 4.43 |
| (V/6)+(B/2.3)—log M | 7.69 | 6.27 | 6.48 | 7.61 | 7.03 |

These copolymers have discriminants above 6.20 and their use is, therefore, not in accordance with the invention.

Four compositions according to the invention will now be described by way of Example. For ease of handling the EVA copolymer was added as a masterbatch in the form of a solution in toluene at concentration of 5 g per 100 mls of solution.

Example 1

30 g of a North Sea Crude oil, hereinafter called oil 1, were placed in a beaker at room temperature and EVA 1, in the form of masterbatch in toluene (5 g per 100 mls solution, was added with stirring. 0.015 mls of the solution were added to the 30 g of crude, i.e. 0.75 mg of EVA 1, or an addition rate of 25 ppm. Pour points were measured by ASTM D97-57. The crude oil had a pour point of 8°C; with 25 ppm of EVA 1 the pour point was reduced to −23°C.

Example 2

25 ppm of EVA 2 were added to a second sample of oil 1 using the method described in Example 1. The pour point was reduced from 8°C to below −26°C.

Example 3

30 g of a different North Sea Crude, hereinafter called oil 2, were placed in a beaker and heated to between 50°C and 60°C and EVA 3, in the form of masterbatch in toluene (5 g per 100 mls solution), was added with stirring. 0.06 mls of the solution were added to the crude, i.e. 3 mg of EVA 3, or an addition rate of 100 ppm. The pour point was reduced from 27°C to 7°C.

Example 4

200 ppm of EVA 4 was added to a 'Chilean' crude by the method described in Example 3. The pour point was reduced from 21°C to 11.5°C.

Comparative tests

To provide a basis for comparison, blends resembling the compositions of Examples 1, 2, 3 and 4 were prepared using C1 instead of EVA1, C2.1 and C2.2 instead of EVA 2, C3 instead of EVA 3 and C4 instead of EVA 4. The pour points of these compositions are given in Table 3. For ease of comparison results of Examples 1 to 4 are included in Table 3.

TABLE 3

| Crude oil | Additive | Discriminant | Addition rate (ppm) | Pour point |
|---|---|---|---|---|
| Oil 1 | NONE | — | — | +8°C |
| | EVA 1 | 6.14 | 25 | −23°C |
| | C1 | 7.69 | 25 | −13°C |
| | EVA 2 | 6.09 | 25 | −26°C |
| | C2.1 | 6.27 | 25 | −6°C |
| | C2.2 | 6.48 | 25 | −11°C |
| Oil 2 | NONE | — | — | +27°C |
| | EVA 3 | 5.78 | 100 | +7°C |
| | C3 | 7.61 | 100 | +14°C |
| 'Chilean' | NONE | — | — | +21°C |
| | EVA 4 | 5.30 | 200 | +11.5°C |
| | C4 | 7.03 | 200 | +21°C |

Table 3 clearly shows that the use of ethylene/vinyl acetate copolymers in accordance with the invention i.e. with discriminants below 6.2, gives a greater depression of the pour point than the use of similar copolymers but with a discriminants above 6.2.

**Claims**

1. The use, to improve the cold flow properties of a petroleum oil, of a copolymer of ethylene with vinyl acetate, which copolymer

(a) contains V% by weight of vinyl acetate where V is 5 to 50,
(b) has a melt flow index of M g/10 minutes as measured according to British Standard 2782: Part 1/105C of 1976 using a 2.16 kg load where M is at least 1 and less than 50, and
(c) has a B parameter between 1 and 10,

characterised in that the copolymer is such that the algebraic expression

$$(V/6)+(B/2.3)-\log M$$

is less than 6.2.

2. The use according to Claim 1, characterised in that V is 15 to 40.

3. A wax containing petroleum oil composition which includes 10 to 10000 parts per million by weight, based on the total composition, of a copolymer of ethylene with vinyl acetate, which copolymer

(a) contains V% by weight of vinyl acetate where V is 5 to 50,
(b) has a melt flow index of M g/10 minutes as measured according to British Standard 2782: Part 1/105C of 1976 using a 2.16 kg load where M is at least 1 and less than 50, and
(c) has a B parameter between 1 and 10

characterised in that the copolymer is such that the algebraic expression

$$(V/6)+(B/2.3)-\log M$$

is less than 6.2.

4. A composition according to Claim 3, characterised in that V is 15 to 40.

5. A composition according to either Claim 3 or Claim 4, characterised in that it contains 10 to 1000 parts per million by weight of the copolymer.

6. A composition according to Claim 5, characterised in that it contains 20 to 250 parts per million by weight of the copolymer.

7. A composition according to any one of Claims 3 to 6, characterised in that the oil is a crude oil.

8. A masterbatch for forming compositions according to any one of Claims 3 to 7, wherein the masterbatch consists of a solution of 0.5 to 50% by weight, based on the total masterbatch, of a copolymer of ethylene and vinyl acetate dissolved in a hydrocarbon solvent wherein the copolymer

(a) contains V% by weight of vinyl acetate where V is 5 to 50,

(b) has a melt flow index of M g/10 minutes as measured according to British Standard 2782: Part 1/105C of 1976 using a 2.16 kg load where M is at least 1 and less than 50, and

(c) has a B parameter between 1 and 10,

characterised in that the copolymer is such that the algebraic expression

$$(V/6)+(B/2.3)-\log M$$

is less than 6.2.

9. A masterbatch according to Claim 8, which consists of 1 to 30% by weight of the copolymer dissolved in toluene, xylene or an aromatic extract from a petroleum oil.

## Revendications

1. L'application, pour améliorer les propriétés d'écoulement à froid d'un pétrole, d'un copolymère d'éthylène et d'acétate de vinyle, ce copolymère:

(a) renfermant V% en poids d'acétate de vinyle, où V est compris entre 5 et 50;

(b) ayant un indice de fluidité en fusion de M g/10 minutes, mesuré selon la norme britannique 2782: Partie 1/105C de 1976 en utilisant un poids de 2,16 kg, où M est au moins égal à 1 et inférieur à 50, et

(c) ayant un paramètre B compris entre 1 et 10,

caractérisé en ce que le copolymère est tel que l'expression algébrique

$$(V/6)+(B/2,3)-\log M$$

soit inférieure à 6,2.

2. L'application suivant la revendication 1, caractérisée en ce que V est compris entre 15 et 40.

3. Composition de pétrole contenant des matières cireuses, renfermant de 10 à 10000 parties par million en poids, sur la base de la composition totale, d'un copolymère d'éthylène et d'acétate de vinyle, ce copolymère

(a) renfermant V% en poids d'acétate de vinyle, où V est compris entre 5 et 50;

(b) ayant un indice de fluidité en fusion de M g/10 minutes, mesuré selon la norme britannique 2782: Partie 1/105C de 1976 en utilisant un poids de 2,16 kg, où M est au moins égal à 1 et inférieur à 50; et

(c) ayant un paramètre B compris entre 1 et 10,

caractérisée en ce que le copolymère est tel que l'expression algébrique

$$(V/6)+(B/2,3)-\log M$$

soit inférieure à 6,2.

4. Composition suivant la revendication 3, caractérisée en ce que V est compris entre 15 et 40.

5. Composition suivant la revendication 3 ou 4, caractérisée en ce qu'elle renferme de 10 à 10000 parties par million en poids de copolymère.

6. Composition suivant la revendication 5, caractérisée en ce qu'elle renferme de 20 à 250 parties par million en poids du copolymère.

7. Composition suivant l'une quelconque des revendications 3 à 6, caractérisée en ce que le pétrole est un pétrole brut.

8. Concentré pour former des compositions suivant l'une quelconque des revendications 3 à 7, selon lequel le concentré est constitué par une solution de 0,5 à 50% en poids, sur la base du concentré total, d-un copolymère d'éthylène et d'acétate de vinyle dissous dans un solvant hydrocarboné, où le copolymère.

(a) contient V% en poids d'acétate de vinyle, où V est compris entre 5 et 50;

(b) a un indice de fluidité en fusion de M g/10 minutes mesuré selon la norme britannique 2782: Partie 1/105C de 1976 en utilisant un poids de 2,16 kg où M est au moins égal à 1 et inférieur à 50, et

(c) a un paramètre B compris entre 1 et 10,

caractérisé en ce que le copolymère est tel que l'expression algébrique

$$(V/6)+(B/2,3)-\log M$$

soit inférieure à 6,2.

6

9. Concentré suivant la revendication 8, renfermant de 1 à 30% en poids de copolymère dissous dans le toluène, le xylène ou un extrait aromatique du pétrole.

**Patentansprüche**

1. Verwendung eines Copolymeren von Ethylen mit Vinylacetat zur Verbesserung der Kältefließeigenschaften eines Öls auf Erdölbasis, wobei das Copolymere

(a) V Gew.-% Vinylacetat enthält, wobei V 5 bis 50 beträgt,
(b) einen gemäß British Standard 2782: Part 1/105C von 1976 unter Anwendung einer Last von 2,16 kg gemessenen Schmelzindex von M g/10 min hat, wobei M mindestens 1 beträgt und kleiner als 50 ist, und
(c) einen zwischen 1 und 10 liegenden B-Parameter hat,

dadurch gekennzeichnet, daß das Copolymere derart beschaffen ist, daß der algebraische Ausdruck

$$(V/6)+(B/2,3)-\lg M$$

kleiner als 6,2 ist.

2. Verwendung nach Anspruch 1, dadurch gekennzeichnet, daß V 15 bis 40 beträgt.

3. Wachshaltige Ölzusammensetzung auf Erdölbasis, die 10 bis 10.000 Gew.-Teile eines Copolymeren von Ethylen mit Vinylacetat pro Million Gew.-Teile der gesamten Zusammensetzung enthält, wobei das Copolymere

(a) V Gew.-% Vinylacetat enthält, wobei V 5 bis 50 beträgt,
(b) einen gemäß British Standard 2782: Part 1/105 C von 1976 unter Anwendung einer Last von 2,16 kg gemessenen Schmelzindex von M g/10 min hat, wobei M mindestens 1 beträgt und kleiner als 50 ist, und
(c) einen zwischen 1 und 10 liegenden B-Parameter hat,

dadurch gekennzeichnet, daß das Copolymere derart beschaffen ist, daß der algebraische Ausdruck

$$(V/6)+(B/2,3)-\lg M$$

kleiner als 6,2 ist.

4. Zusammensetzung nach Anspruch 3, dadurch gekennzeichnet, daß V 15 bis 40 beträgt.

5. Zusammensetzung nach Anspruch 3 oder 4, dadurch gekennzeichnet, daß sie pro Million Gew.-Teile 10 bis 1.000 Gew.-Teile des Copolymeren enthält.

6. Zusammensetzung nach Anspruch 5, dadurch gekennzeichnet, daß sie pro Million Gew.-Teile 20 bis 250 Gew.-Teile des Copolymeren enthält.

7. Zusammensetzung nach einem der Ansprüche 3 bis 6, dadurch gekennzeichnet, daß das Öl ein Roherdöl ist.

8. Vormischung für die Bildung von Zusammensetzungen nach einem der Ansprüche 3 bis 7, wobei die Vormischung aus einer Lösung von 0,5 bis 50 Gew.-%, auf das Gesamtgewicht der Vormischung bezogen, eines in einem Kohlenwasserstofflösungsmittel gelösten Copolymeren von Ethylen und Vinylacetat besteht, wobei das Copolymere

(a) V Gew.-% Vinylacetat enthält, wobei V 5 bis 50 beträgt,
(b) einen gemäß British Standard 2782: Part 1/105 C von 1976 unter Anwendung einer Last von 2,16 kg gemessenen Schmelzindex von M g/10 min hat, wobei M mindestens 1 beträgt und kleiner als 50 ist, und
(c) einen zwischen 1 und 10 liegenden B-Parameter hat,

dadurch gekennzeichnet, daß das Copolymere derart beschaffen ist, daß der algebraische Ausdruck

$$(V/6)+(B/2,3)-\lg M$$

kleiner als 6,2 ist.

9. Vormischung nach Anspruch 8, bestehend aus 1 bis 30 Gew.-% des in Toluol, Xylol oder einem aromatischen Extrakt aus einem Öl auf Erdölbasis aufgelösten Copolymeren.

Fig.1.

CHEMICAL SHIFT ppm

0 021 607

0·85

CHEMICAL SHIFT ppm

*Fig .2.*

Fig.3.

A2

4·85
CHEMICAL SHIFT ppm

0 021 607